# EUROPEAN PATENT APPLICATION

(11) **EP 3 579 159 A1**
(43) Date of publication of application: **11.12.2019**
(21) Application number: 18747831.8
(22) Date of filing: 30.01.2018
(51) Int. Cl.: G06Q 10/02, G06Q 50/30

(54) **DOCK MANAGEMENT SYSTEM, RESERVATION MANAGEMENT SERVER, SHIP MANAGER TERMINAL, AND DOCK MANAGER TERMINAL**

(30) Priority: 31.01.2017 JP 2017015913
(71) Applicant: Dentsu Inc., Tokyo 105-7001 (JP)
(72) Inventor: SO Hakubun, Tokyo 105-7001 (JP)
(74) Representative: EIP
(86) International application number: PCT/JP2018/002980
(87) International publication number: WO 2018/143200

(57) **Abstract**

Providing a port management system, a reservation management server, a ship manager terminal, and a port manager terminal for realizing efficient port management.

Provided is a port management system comprising: a ship manager terminal for a ship manager; a port manager terminal for a port manager; and a reservation management server, wherein the ship manager terminal comprises: a ship information setting module that sets ship information related to a ship; a port reservation application module that sets port reservation application information for applying port use reservation; and a first display controller that displays a screen showing port schedule information indicating reserved dates and times of each port when the port reservation application information is set, the port manager terminal comprises: a port information setting module that sets port information related to a port; a port reservation approval module that sets an answer of whether or not to approve the port use reservation application of the port reservation application information; and a second display controller that displays a screen showing the port schedule information when the answer is set, and the reservation management server comprises: a ship information registration module that registers the ship information; a port information registration module that registers the port information; a reservation controller that controls the port use reservation based on the port reservation application information and the answer; and a port schedule information generator that generates the port schedule information by considering a use reservation state of each port and transmits the port schedule information to the ship manager terminal and the port manager terminal.

## Description

### Technical Field

The present invention relates to a port management system, a reservation management server, a ship manager terminal, and a port manager terminal.

### Background Art

In a shipping transportation business, it is important to efficiently manage a plurality of ports. Under current circumstances, the following process is required to reserve use of each port, and it is burdensome. (1) A person who applies for reservation inquires a manager of the port about availability, (2) the manager of the port confirms the availability by checking paper or another independent recording medium and answers the person who applies for reservation about the availability, (3) the person who applies for reservation creates a use application document indicating which ship uses which landing pier of which port in which period of time, and transmits a reservation application to the manager of the port by telephone, mail, facsimile, or the like, and (4) the manager of the port sends a message of acceptance of the application by mail, facsimile, or the like. When the managers are different between a departure port and an arrival port, the above process has to be performed a plurality of times, and the burden is huge.

When a movement from a certain location to another location is generated and both ends and a via location are included in the movement, it is important to efficiently manage available time of stop locations including the via location. This is common not only in the management of ports, but also in the management of parking lots, and this is also common in general stops of arbitrary transportation means other than ships and vehicles.

Patent Literature 1 discloses that reservation of ship operation schedule is performed. However, Patent Literature 1 does not consider reserving ports at all. Further, Patent Literature 1 is based on the premise of a ship that has completed procedures necessary for use of port.

### Citation List

### Patent Literature

Patent Literature 1: JP 2003-44727 A

### Summary of Invention

### Technical Problem

The present invention has been made in view of the above problems, and an object of the present invention is to provide a port management system, a reservation management server, a ship manager terminal, and a port manager terminal for realizing efficient port management. Another object of the present invention is to provide a parking lot management system, a reservation management server, a vehicle manager terminal, and a parking lot manager terminal for realizing efficient parking lot management for securing in advance the availability of start and end points when a person moves from a certain location to another location (including a via location) by vehicle.

### Solution to Problem

According to one embodiment of the present invention, provided is a port management system comprising: a ship manager terminal for a ship manager; a port manager terminal for a port manager; and a reservation management server, wherein the ship manager terminal comprises: a ship information setting module that sets ship information related to a ship; a port reservation application module that sets port reservation application information for applying port use reservation; and a first display controller that displays a screen showing port schedule information indicating reserved dates and times of each port when the port reservation application information is set, the port manager terminal comprises: a port information setting module that sets port information related to a port; a port reservation approval module that sets an answer of whether or not to approve the port use reservation application of the port reservation application information; and a second display controller that displays a screen showing the port schedule information when the answer is set, and the reservation management server comprises: a ship information registration module that registers the ship information; a port information registration module that registers the port information; a reservation controller that controls the port use reservation based on the port reservation application information and the answer; and a port schedule information generator that generates the port schedule information by considering a use reservation state of each port and transmits the port schedule information to the ship manager terminal and the port manager terminal.

It is preferable that the reservation management server has a sales item information controller that generates sales item information including a ship to be used, a departure port, date and time of departure, an arrival port, and date and time of arrival based on the ship information, the port information, and the port schedule information.

The port information may include information of landing piers included in each port, and the port schedule information generator may generate the port schedule information for each landing piers of the ports.

The screen showing the port schedule information may include a port setting means and a date setting means

According to another embodiment of the present invention, provided is a reservation management server comprising: a port information registration module that registers port information related to a port; a reservation controller that controls port use reservation based on port reservation application information for applying port use reservation and an answer of whether or not to approve the port use reservation application of the port reservation application information; and a port schedule information generator that generates port schedule information indicating reserved dates and times of each port by considering a use reservation state of each port and transmits the port schedule information to a transmission source of the port reservation application information and the answer.

According to another embodiment of the present invention, provided is a ship manager terminal comprising: a port reservation application module that sets port reservation application information for applying port use reservation; and a display controller that displays a screen showing port schedule information indicating reserved dates and times of each port, which is generated by considering the port reservation application information and an answer of whether or not to approve the port use reservation application of the port reservation application information when the port reservation application information is set.

According to another embodiment of the present invention, provided is a port manager terminal comprising: a port information setting module that sets port information related to a port; a port reservation approval module that sets an answer of whether or not to approve a port use reservation application; and a display controller that displays a screen showing port schedule information indicating reserved dates and times of each port, which is generated by considering the answer when the answer is set.

According to another embodiment of the present invention, provided is a port management system comprising: a port information registration module that registers port information related to a port; a port reservation application module that sets port reservation application information for applying port use reservation; a port reservation approval module that sets an answer of whether or not to approve the port use reservation application of the port reservation application information; a reservation controller that controls the port use reservation based on the port reservation application information and the answer; a port schedule information generator that generates port schedule information by considering a use reservation state of each port; and a display controller that causes a screen showing the port schedule information to be displayed.

### Advantageous Effects of Invention

It is possible to efficiently manage the port.

### Brief Description of Drawings

Fig. 1A is a conceptual schematic diagram of the present invention.
Fig. 1B is a block diagram illustrating an outline configuration of a port management system according to an embodiment.
Fig. 2A is a diagram illustrating an example of a ship information setting screen.
Fig. 2B is a diagram illustrating an example of a ship information list screen.
Fig. 2C is a diagram illustrating an example of a ship information edit screen.
Fig. 3A is a diagram illustrating an example of a port information setting screen.
Fig. 3B is a diagram illustrating an example of a port information list screen.
Fig. 3C is a diagram illustrating an example of a port information edit screen.
Fig. 4A is a diagram illustrating an example of a port schedule screen.
Fig. 4B is a diagram illustrating an example of a port schedule screen.
Fig. 5 is a sequence diagram for explaining a port reservation.
Fig. 6A is a diagram illustrating an example of a port reservation screen.
Fig. 6B is a diagram illustrating an example of a port reservation screen.
Fig. 7 is a diagram illustrating an example of a sales item information list screen.
Fig. 8 is a diagram illustrating an example of a sales item information edit screen.
Fig. 9 is a conceptual diagram of traffic data utilization using artificial intelligence.
Fig. 10 is a block diagram illustrating an outline configuration of a parking lot management system according to an embodiment.
Fig. 11A is a diagram illustrating an example of a vehicle information setting screen.
Fig. 11B is a diagram illustrating an example of a vehicle information list screen.
Fig. 11C is a diagram illustrating an example of a vehicle information edit screen.
Fig. 12A is a diagram illustrating an example of a parking lot information setting screen.
Fig. 12B is a diagram illustrating an example of a parking lot information list screen.
Fig. 12C is a diagram illustrating an example of a parking lot information edit screen.
Fig. 13A is a diagram illustrating an example of a parking lot schedule screen.
Fig. 13B is a diagram illustrating an example of a parking lot schedule screen.
Fig. 14 is a sequence diagram for explaining a parking lot reservation.
Fig. 15A is a diagram illustrating an example of a parking lot reservation screen.
Fig. 15B is a diagram illustrating an example of a parking lot reservation screen.
Fig. 16 is a diagram illustrating an example of a marketing data display.

### Description of Embodiments

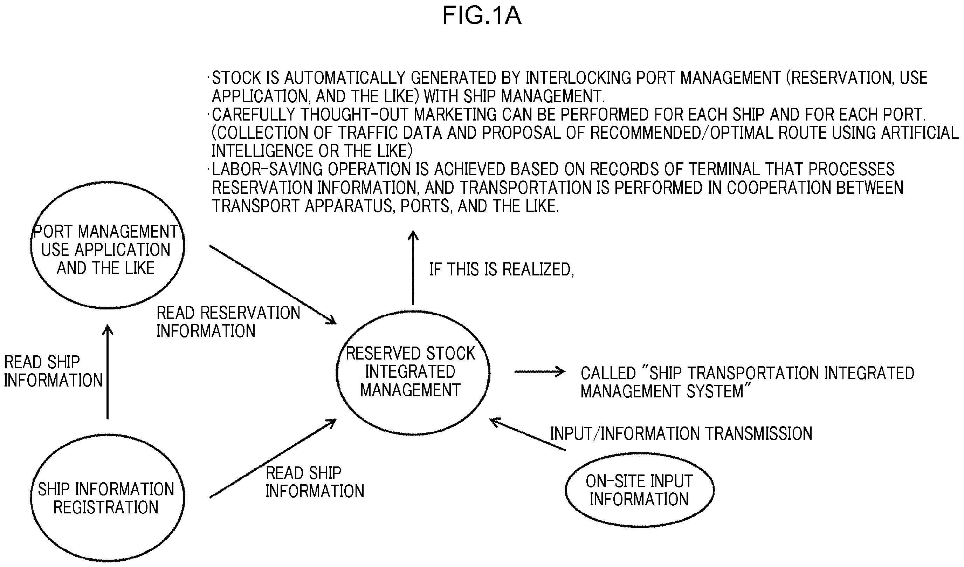

Hereinafter, embodiments according to the present invention will be specifically described with reference to the drawings. Fig. 1A is a conceptual schematic diagram of the present invention. In the present invention, ship information is registered in advance, and a plurality of ports whose management main bodies are different are managed by a single system. Thereby, information related to behaviors of ships (when and which ship moves from which port to which port) is automatically collected, so that operations of shipping transportation operators are improved in efficiency.

Specifically, a screen and a system configuration by which a port use reservation application can be easily made are realized. In particular, by making reservation applications for two ports, it is possible to generate available ship seat stock between the two ports, and integrated management of reserved stock is realized. Further, it is possible to carry out carefully thought-out marketing for each ship or port through the system. Further, labor-saving operation can be achieved by accumulating information of a route, a speed, and a sailing condition of a ship based on records (sales, reservation consumption, ship movement path history, and the like) of a terminal that processes reservation information.

The present invention can be utilized not only for ports but also for traffic and other mechanisms having the same restriction. Specifically, the present invention can be utilized in a case where a legally or socially defined finite place that is required for passengers to get on and off and/or required to deliver raw materials such as foodstuffs related to a service to be provided and required to transport, carry-in/out, supply, and deliver freight such as fuel is occupied in a certain means of transportation.

The present invention can also be utilized in a case where passengers and freight are mixedly put on a ship or another transportation means and transported between two places. Further, when a movement form is a case where a ship operates while travelling around ports and the above occupied place, and the number of routes and the number of occupied places are one or two or more, the present invention can be used to reserve and manage the routes and the occupied places.

### (First Embodiment)

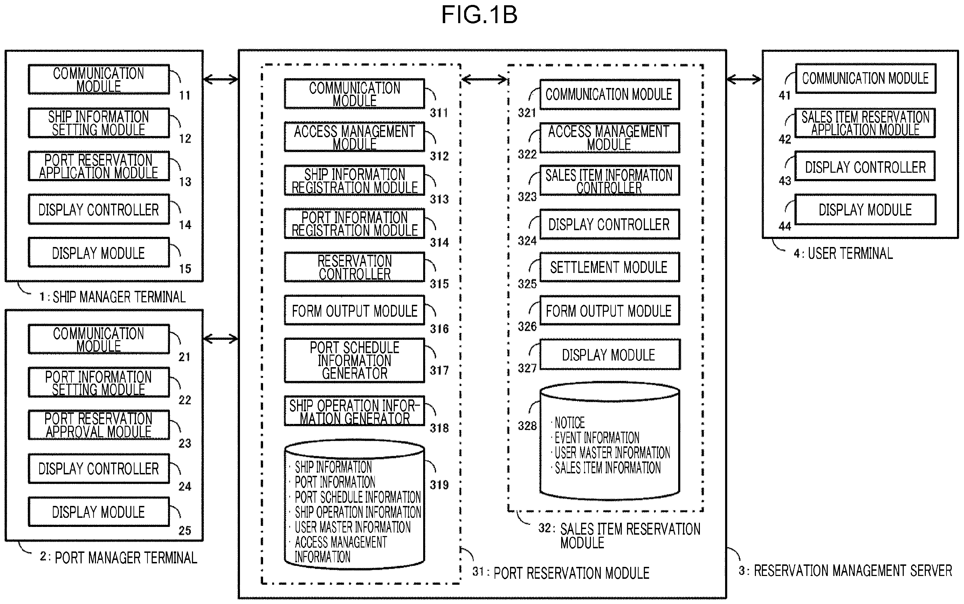

Fig. 1B is a block diagram illustrating an outline configuration of a port management system according to an embodiment. The port management system includes a ship manager terminal 1, a port manager terminal 2, a reservation management server 3, and a user terminal 4. Although Fig. 1B illustrates one ship manager terminal 1, one port manager terminal 2, and one user terminal 4, normally there are a plurality of ship manager terminals 1, port manager terminals 2, and user terminals 4. By registering ship information and applying for a use application of a port by reading the registered ship information through operation of the port management system, it is possible not only to grasp when a ship moves from which port to which port, but also to generate the number of available seats in a moving ship that can be reserved (hereinafter referred to as reserved stock).

First, the ship manager terminal 1 will be described. The ship manager terminal 1 is used by a ship manager who manages an individual ship. The ship manager terminal 1 has a communication module 11, a ship information setting module 12, a port reservation application module 13, a display controller 14, a display module 15, and the like.

The communication module 11 communicates with the reservation management server 3 and the like. The ship information setting module 12 receives setting of information (hereinafter referred to as ship information) related to a ship managed by the ship manager himself or herself from the ship manager and transmits the ship information to the reservation management server 3 through the communication module 11.

The port reservation application module 13 receives setting of information for applying for a use reservation of a port, more specifically, information including a port desired to be used and use start date and time and use end date and time of the port (hereinafter referred to as port reservation application information) from the ship manager. Then, the port reservation application module 13 transmits the port reservation application information to the reservation management server 3 through the communication module 11.

The display controller 14 causes the display module 15 to display a ship information setting screen, a ship information list screen, a ship information edit screen, a port schedule screen, a port reservation screen, and the like.

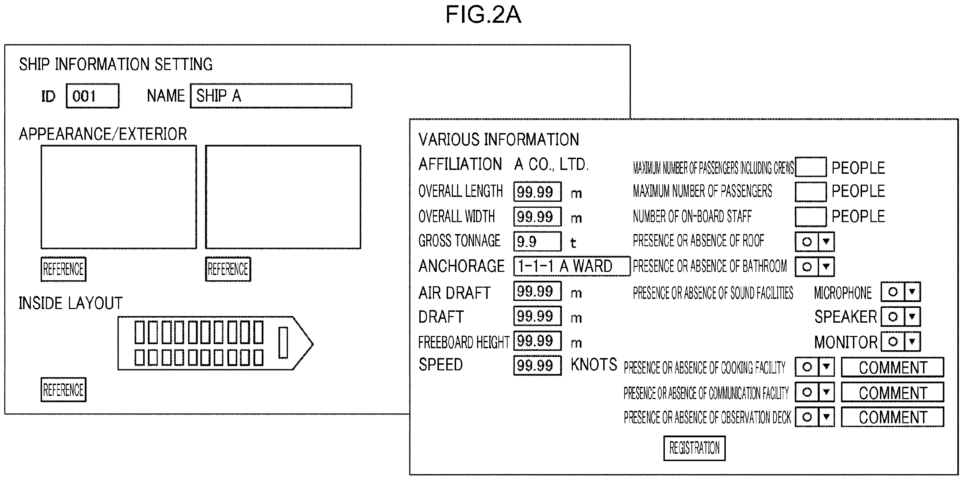

Fig. 2A is a diagram illustrating an example of the ship information setting screen. The ship information setting screen is a screen for newly registering a ship and is displayed on the display module 15 when the ship manager performs a predetermined operation on the ship manager terminal 1.

The ship information setting screen includes in advance a unique ship ID attached to each ship. On the ship information setting screen, it is possible to set ship information such as a name, an appearance/exterior, an inside layout, and the like of the ship according to an operation of the ship manager. Further, on the ship information setting screen, it is also possible to set more detailed ship information such as a business operator to which the ship belongs, overall length, overall width, gross tonnage, and the like. After required ship information is set, when a registration button is selected by the ship manager, the set ship information is stored in a storage module (not illustrated in the drawings) in the ship manager terminal 1 and/or transmitted to the reservation management server 3.

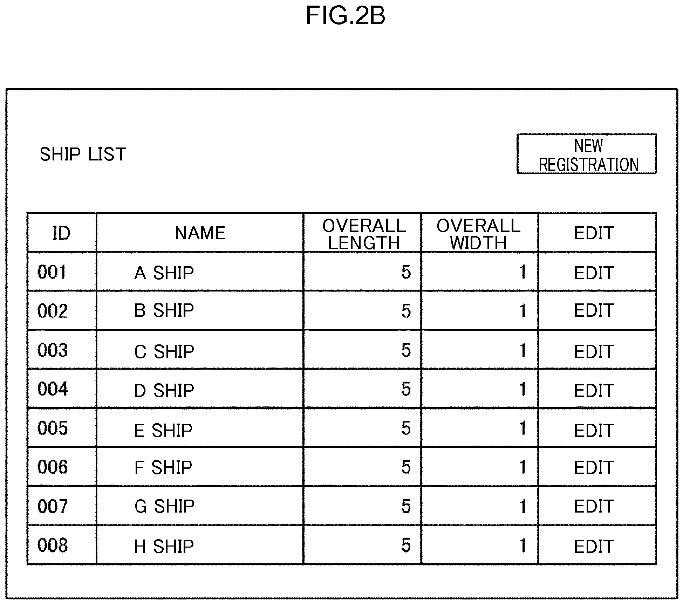

Fig. 2B is a diagram illustrating an example of a ship information list screen. The ship information list screen is a screen for displaying and confirming a list of registered ships. When the ship manager performs a predetermined operation on the ship manager terminal 1, the ship information is acquired from the storage module in the ship manager terminal 1 or the reservation management server 3 and the ship information list screen is displayed on the display module 15.

The ship information list screen includes at least part of each piece of ship information, for example, the ship ID, the name of the ship, the overall length, and the overall width. The ship information setting screen illustrated in Fig. 2A may be displayed on the display module 15 when a new registration button is provided on the ship information list screen and the new registration button is selected by the ship manager. An edit button associated with each ship is provided on the ship information list screen. When the edit button is selected, the ship information edit screen is displayed on the display module 15.

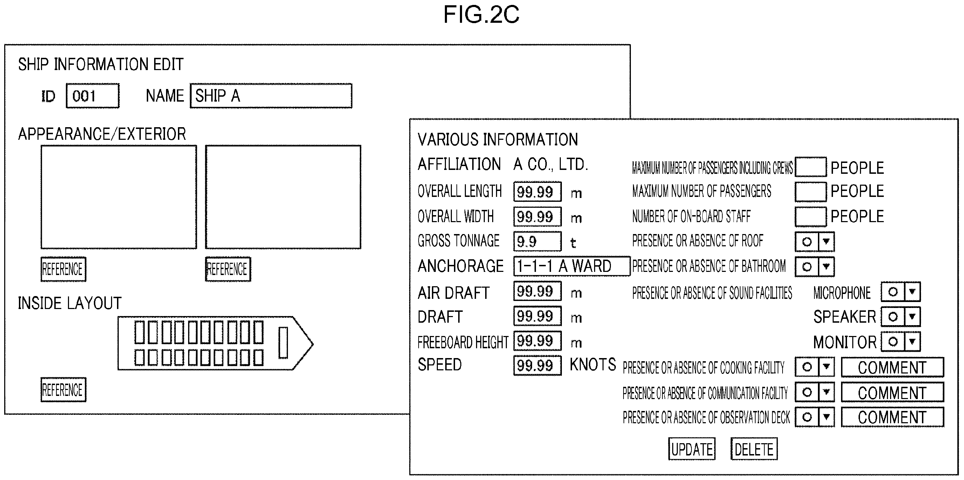

Fig. 2C is a diagram illustrating an example of the ship information edit screen. The ship information edit screen is a screen for confirming, updating, and deleting registered ship information. The ship information edit screen is similar to the ship information setting screen illustrated in Fig. 2A, and set ship information can be updated on the ship information edit screen. The ship information edit screen is provided with an update button and a delete button. After required ship information is updated, when the update button is selected by the ship manager, the updated ship information is stored in the storage module in the ship manager terminal 1 and/or transmitted to the reservation management server 3. When the delete button is selected by the ship manager, the ship information is deleted.

The port schedule screen and the port reservation screen displayed on the display module 15 will be described later.

Let us return to Fig. 1B. The port manager terminal 2 will be described. The port manager terminal 2 is used by a port manager who manages an individual port. The port manager terminal 2 has a communication module 21, a port information setting module 22, a port reservation approval module 23, a display controller 24, a display module 25, and the like.

The communication module 21 communicates with the reservation management server 3 and the like. The port information setting module 22 receives setting of information (hereinafter referred to as port information) related to one port or a plurality of ports managed by the port manager himself or herself from the port manager and transmits the port information to the reservation management server 3 through the communication module 21.

The port reservation approval module 23 receives the port reservation application information set by the ship manager terminal 1 from the reservation management server 3. Then, the port reservation approval module 23 sets an answer of whether or not to approve the port use reservation application of the received port reservation application information according to an operation from the port manager and transmits the answer to the reservation management server 3.

The display controller 24 causes the display module 25 to display a port information setting screen, a port information list screen, a port information edit screen, a port schedule screen, and the like.

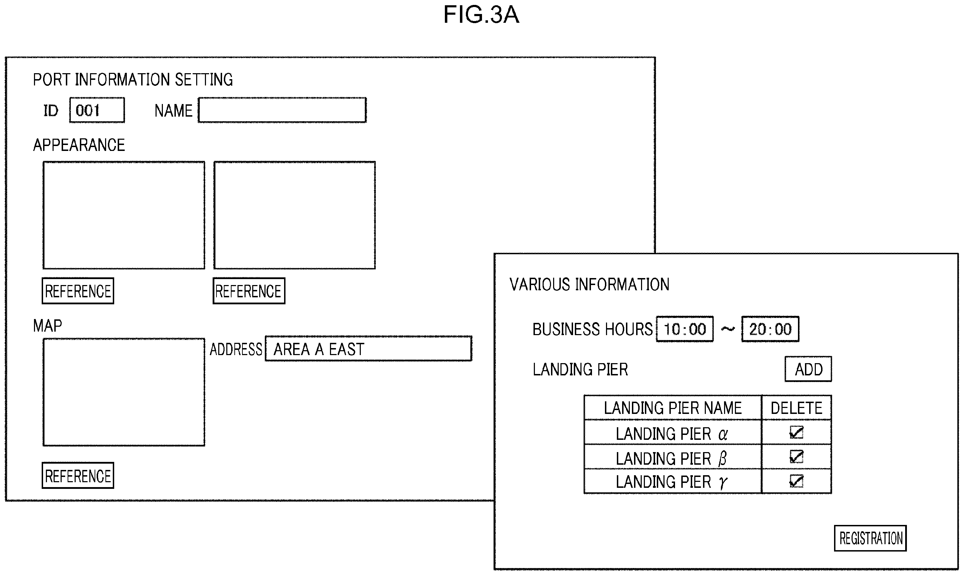

Fig. 3A is a diagram illustrating an example of the port information setting screen. The port information setting screen is a screen for newly registering a port and is displayed on the display module 25 when the port manager performs a predetermined operation on the port manager terminal 2.

The port information setting screen includes in advance a unique port ID attached to each port. On the port information setting screen, it is possible to set port information such as a name, an appearance, an address, a map, and the like of the port according to an operation of the port manager. Further, on the port information setting screen, it is also possible to set more detailed port information such as business hours, a name of a landing pier, and the like. After required port information is set, when a registration button is selected by the port manager, the set port information is stored in a storage module (not illustrated in the drawings) in the port manager terminal 2 and/or transmitted to the reservation management server 3.

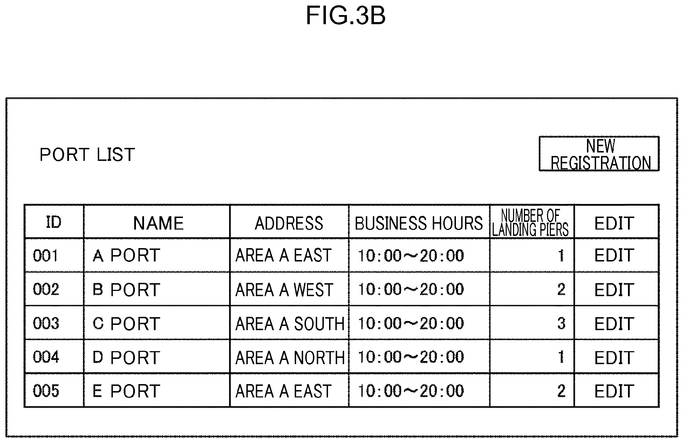

Fig. 3B is a diagram illustrating an example of the port information list screen. The port information list screen is a screen for displaying a list of registered ports. When the port manager performs a predetermined operation on the port manager terminal 2, the port information is acquired from the storage module in the port manager terminal 2 or the reservation management server 3 and the port information list screen is displayed on the display module 25.

The port information list screen includes at least part of each piece of port information, for example, the port ID, and the name, the address, the business hours, and the number of landing piers of the port. The port information setting screen illustrated in Fig. 3A may be displayed on the display module 25 when a new registration button is provided on the port information list screen and the new registration button is selected by the port manager. An edit button associated with each port is provided on the port information list screen. When the edit button is selected, the port information edit screen is displayed on the display module 25.

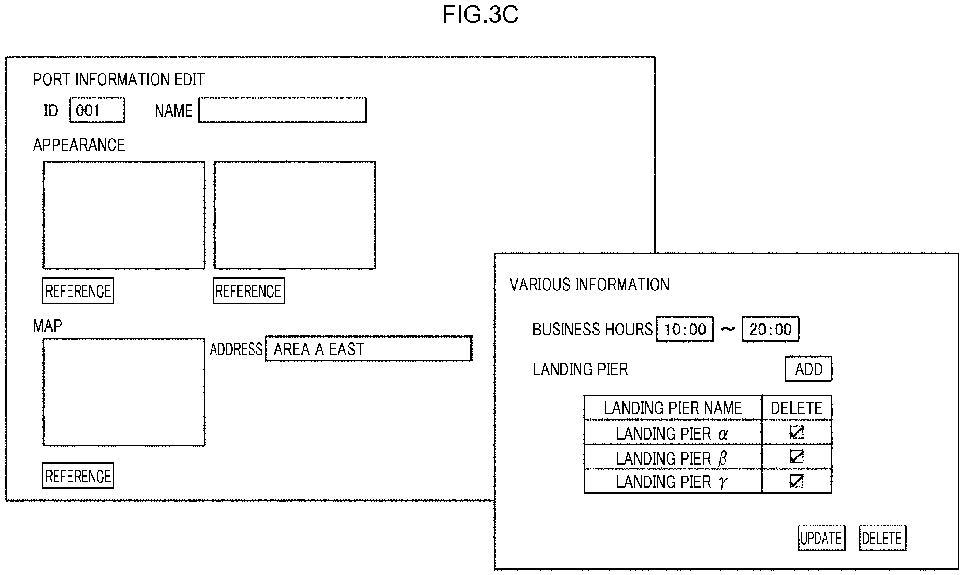

Fig. 3C is a diagram illustrating an example of the port information edit screen. The port information edit screen is a screen for confirming, updating, and deleting registered port information. The port information edit screen is similar to the port information setting screen illustrated in Fig. 3A, and set port information can be updated on the port information edit screen. The port information edit screen is provided with an update button and a delete button. After required port information is updated, when the update button is selected by the port manager, the updated port information is stored in the storage module in the port manager terminal 2 and/or transmitted to the reservation management server 3. When the delete button is selected by the port manager, the port information is deleted.

The port schedule screen displayed on the display module 25 will be described later.

Subsequently, the reservation management server 3 in Fig. 1B will be described. The reservation management server 3 is mainly used by a business operator who provides a port use platform and performs management (in particular, reservation management) of all ports. Ships and ports can be integrally managed by the reservation management server 3. The reservation management server 3 includes a port reservation module 31 and a sales item reservation module 32. The port reservation module 31 and the sales item reservation module 32 may be distributed to different devices. However, in the description below, the port reservation module 31 and the sales item reservation module 32 shall be in one device.

The port reservation module 31 is mainly accessed from the ship manager terminal 1 and the port manager terminal 2 and includes a communication module 311, an access management module 312, a ship information registration module 313, a port information registration module 314, a reservation controller 315, a form output module 316, a port schedule information generator 317, a ship operation information generator 318, a storage module 319, and the like.

The communication module 311 communicates with the ship manager terminal 1, the port manager terminal 2, the sales item reservation module 32, and the like. The access management module 312 manages an ID and a password of each user based on user master information stored in the storage module 319 and stores access management information indicating which user accessed what information in the storage module 319.

The ship information registration module 313 acquires ship information from the ship manager terminal 1 through the communication module 311 and registers the ship information in the storage module 319. The ship of the ship information registered here is a ship to be managed in the port management system.

The port information registration module 314 acquires port information from the port manager terminal 2 through the communication module 311 and registers the port information in the storage module 319. The ship of the port information registered here is a port to be managed in the port management system.

The reservation controller 315 receives port reservation application information from the port reservation application module 13 in the ship manager terminal 1. Then, the reservation controller 315 transmits the port reservation application information to a port manager terminal 2 of a port manager who manages a port to which a use reservation is applied in the port reservation application information. Further, the reservation controller 315 receives an answer to the use reservation application from the port reservation approval module 23 in the port manager terminal 2.

The reservation controller 315 controls use reservation of each port based on port reservation application information and an answer to the port reservation application information. In other words, the reservation controller 315 grasps date and time where the use reservation of each port is set. When the port information includes information of landing piers included in each port, the reservation controller 315 may control the use reservation for each landing pier.

When a use reservation application from the ship manager terminal 1 is approved, the form output module 316 outputs a form indicating the approval to the ship manager terminal 1. A mode of the output is not limited. For example, the form is outputted to the ship manager terminal 1 through email or facsimile.

The port schedule information generator 317 generates port schedule information indicating reserved dates and times by considering a use reservation state of each port. When the port use reservation application is approved, the port schedule information generator 317 updates the port schedule information. The port schedule information generator 317 stores the port schedule information in the storage module 319 and, if necessary, transmits the port schedule information to the ship manager terminal 1 and the port manager terminal 2.

The ship operation information generator 318 generates ship operation information based on the ship information, the port information, and the port schedule information, and stores the ship operation information in the storage module 319 and/or transmits the ship operation information to the sales item reservation module 32. The ship operation information includes information indicating when and which ship will operate from (which landing pier of) which port to which port.

The storage module 319 stores the ship information, the port information, the port schedule information, the ship operation information, the user master information, the access management information, and the like.

As described above, the port schedule information is transmitted to the ship manager terminal 1 and the port manager terminal 2, and the port schedule screen including the port schedule information is displayed on the display modules 15 and 25, respectively, by the display controllers 14 and 24 of the ship manager terminal 1 and the port manager terminal 2.

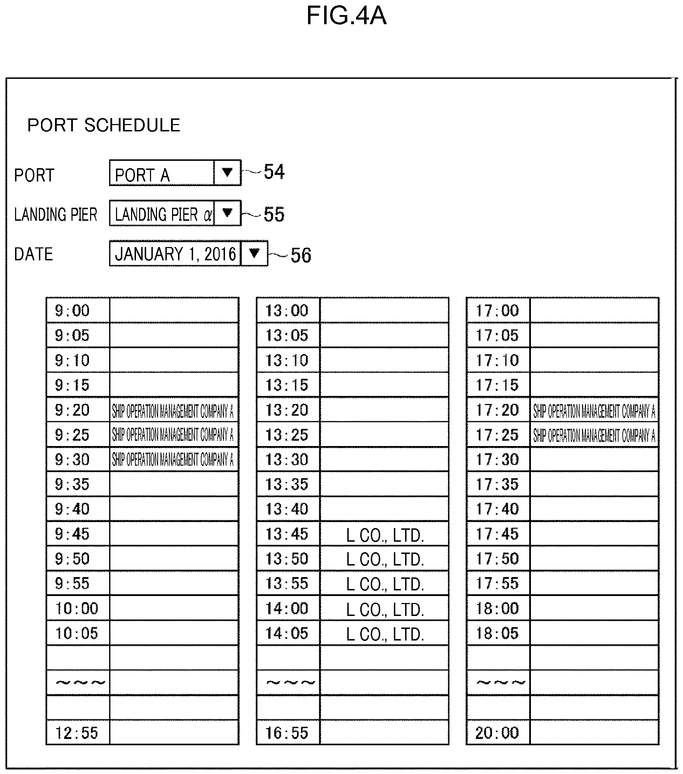

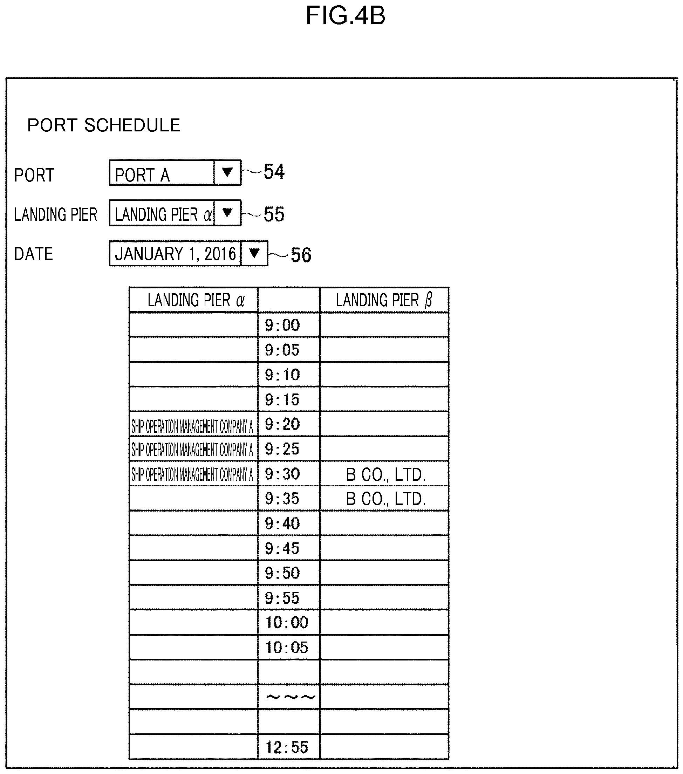

Fig. 4A and Fig. 4B are diagrams illustrating an example of the port schedule screen. When the ship manager (or the port manager) performs a predetermined operation on the ship manager terminal 1 (or the port manager terminal 2), the port schedule information is acquired from the reservation management server 3 and the port schedule screen is displayed on the display module 15 (or the display module 25).

The port schedule screen includes information indicating which ship manager (or which ship) performs use reservation in each period of time as the port schedule information. It is known that there is no use reservation in a period of time where there is no ship manager name. The port schedule screen also includes a port setting means 54, a landing pier setting means 55, and a date setting means 56. As these setting means, means by which setting can be easily performed, such as pull-down type means, are desirable. When a port is selected by the port setting means 54, a landing pier included in the port can be selected by the landing pier setting means 55. The port schedule information of the selected port, landing pier, and date is displayed.

Fig. 4A is an illustrative example of a schedule screen of a port having one landing pier. Fig. 4B is an illustrative example of a schedule screen of a dock type port having a plurality of landing piers (landing piers α and β in Fig. 4B), and schedule information of the landing piers is displayed on one screen.

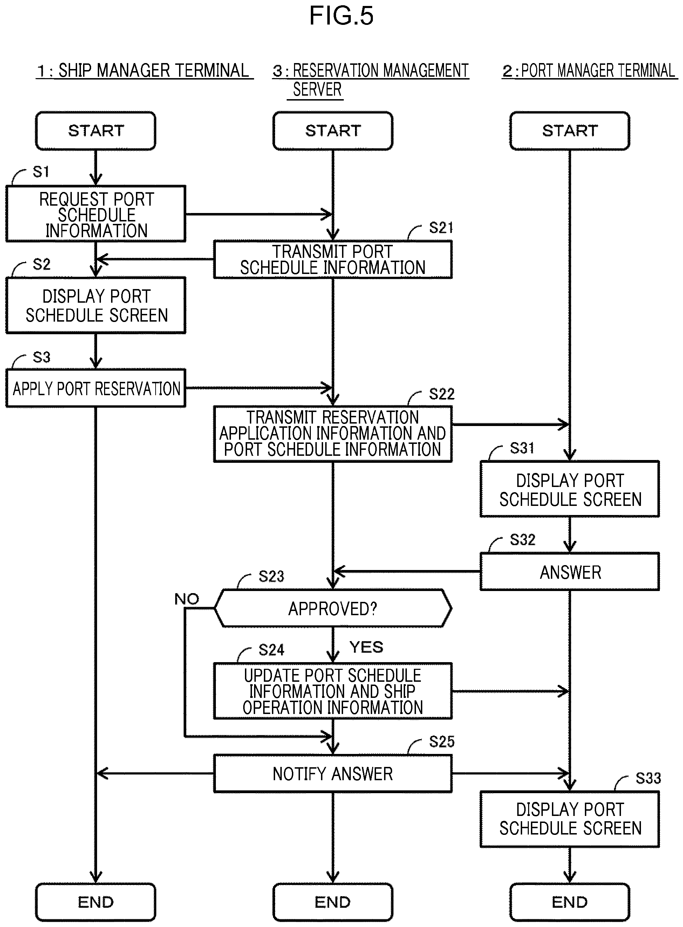

Fig. 5 is a sequence diagram for explaining a port reservation. The ship information and the port information are registered in advance by the ship information registration module 313 and the port information registration module 314, respectively, and the port schedule information is generated by the port schedule information generator 317.

First, the ship manager performs an operation for a port use reservation application on the ship manager terminal 1. In response to this, the port reservation application module 13 in the ship manager terminal 1 requests the reservation management server 3 to transmit the port schedule information (step S1).

When the reservation controller 315 of the reservation management server 3 receives a request of the port schedule information, the reservation controller 315 transmits the port schedule information to a transmission source of the request (step S21). When the display controller 14 of the ship manager terminal 1 receives the port schedule information, the display controller 14 causes the display module 15 to display the port reservation screen including the port schedule information (step S2).

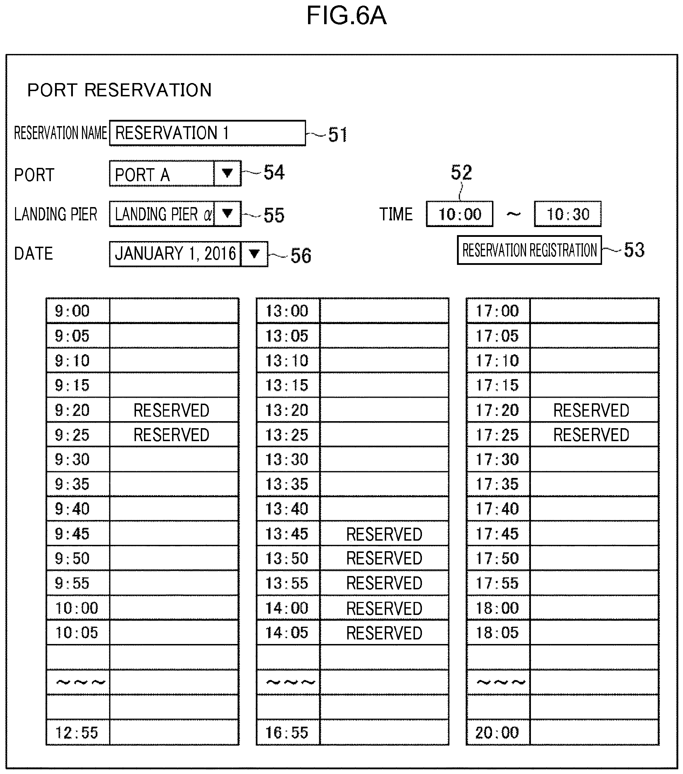

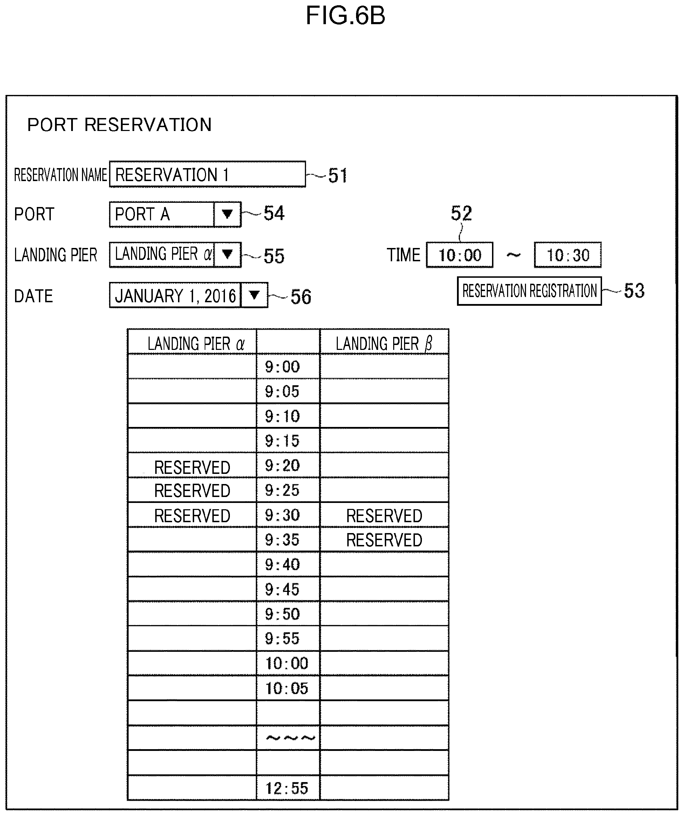

Fig. 6A and Fig. 6B are diagrams illustrating an example of the port reservation screen. The port reservation screen is similar to the port schedule screen in Fig. 4 and further includes a reservation name setting means 51, a reservation time setting means 52, and a reservation registration means 53. The reservation name setting means 51 sets a reservation name when the ship manager inputs an arbitrary reservation name. In response to an operation of the ship manager, a port, a landing pier, date, and times (use start times and use end times), where a use reservation is applied, are set by the port setting means 54, the landing pier setting means 55, the date setting means 56, and the reservation time setting means 52. These are set as the port reservation application information. It is desirable that a date and time that has been reserved cannot be selected.

Fig. 6A is an illustrative example of a schedule screen of a port having one landing pier. Fig. 6B is an illustrative example of a schedule screen of a dock type port having a plurality of landing piers (landing piers α and β in Fig. 6B), and the landing piers can be reserved from one screen.

Further, when the ship manager selects the reservation registration means 53, the port reservation application module 13 transmits the set port reservation application information to the reservation management server 3 (step S3 in Fig. 5).

In this way, when setting the port reservation application information, the display controller 14 causes the display module 15 to display a screen including the port schedule information. Therefore, the ship manager can easily visually grasp a use reservation state of the port and can easily make a use reservation application of free date and time.

When the reservation controller 315 of the reservation management server 3 receives the port reservation application information, the reservation controller 315 transmits the port reservation application information and the port schedule information to the port manager terminal 2 of the port manager to whom the use reservation is applied (step S22).

When the display controller 24 of the port manager terminal 2 receives the port reservation application information and the port schedule information, the display controller 24 causes the display module 25 to display the port schedule screen including the port schedule information and content of the use reservation application (step S31). Then, in response to an operation of the port manager, the port reservation approval module 23 sets an answer of whether or not to approve the use reservation application and transmits the answer to the ship manager terminal 1 of a transmission source of the port reservation application information (step S32).

In this way, when setting an answer of whether or not to approve the use reservation application, the display controller 24 causes the display module 25 to display the screen including the port schedule information. Therefore, the port manager can easily visually grasp the use reservation state of the port and can easily determine whether or not to approve the use reservation application.

The reservation controller 315 of the reservation management server 3 receives the answer from the port manager terminal 2. When the answer is an answer indicating that the use reservation application is approved (YES of step S23), the port schedule information generator 317 and the ship operation information generator 318 update the port schedule information and the ship operation information, respectively (step S24). Then, the reservation controller 315 transmits information indicating that the use reservation is approved to the ship manager terminal 1 that has transmitted the port reservation application information (step S25). At this time, the form output module 316 outputs a necessary form to the ship manager terminal 1.

When the answer is an answer indicating that the use reservation application is not approved (NO of step S23), the reservation controller 315 transmits information indicating that the use reservation is not approved to the ship manager terminal 1 that has transmitted the port reservation application information (step S25). In this way, the port use reservation is completed. It is desirable that a fact that the answer has been notified to the ship manager terminal 1 and the updated port schedule information and ship operation information can be referred to from the port manager terminal 2 (step S33).

As described above, the port management system includes the ship manager terminal 1, the port manager terminal 2, and the port reservation module 31 of the reservation management server 3. Thereby, the ship manager can easily perform operations from confirmation of the port schedule information to application of the use reservation on the ship manager terminal 1. Further, the port manager can easily confirm the port schedule information and make an answer to the application of the use reservation on the port manager terminal 2, and a result of the answer is reflected on the port schedule information.

As described below, the reservation management server 3 of the port management system in Fig. 1B has the sales item reservation module 32, and it is desirable that each sales item can be reserved from the user terminal 4.

The sales item reservation module 32 is mainly accessed from a business operator who provides a port use platform. The sales item reservation module 32 includes a communication module 321, an access management module 322, a sales item information controller 323, a display controller 324, a settlement module 325, a form output module 326, a display module 327, a storage module 328, and the like.

The communication module 321 communicates with the port reservation module 31, the user terminal 4, and the like. The access management module 322 manages an ID and a password of each user based on user master information stored in the storage module 328 and stores access management information indicating which user accessed what information in the storage module 328.

The sales item information controller 323 generates sales item information indicating salable sales items and registers the sales item information in the storage module 328 based on the ship operation information generated by the ship operation information generator 318 in the port reservation module 31. More specifically, the sales item information controller 323 refers to the ship operation information, grasps ships and ports that are not reserved to be used, and generates sales item information including the names of each sales item, the ship to be used, the departure port, the date and time of the departure, the arrival port, the date and time of the arrival, and the freight charge according to an intention of the business operator who provides the port use platform. Each sales item may be associated with an arbitrary notice or event stored in the storage module 328 or may be accommodated with meals or a guide.

The display controller 324 causes the display module 327 to display a sales item information list screen, a sales item information edit screen, and the like.

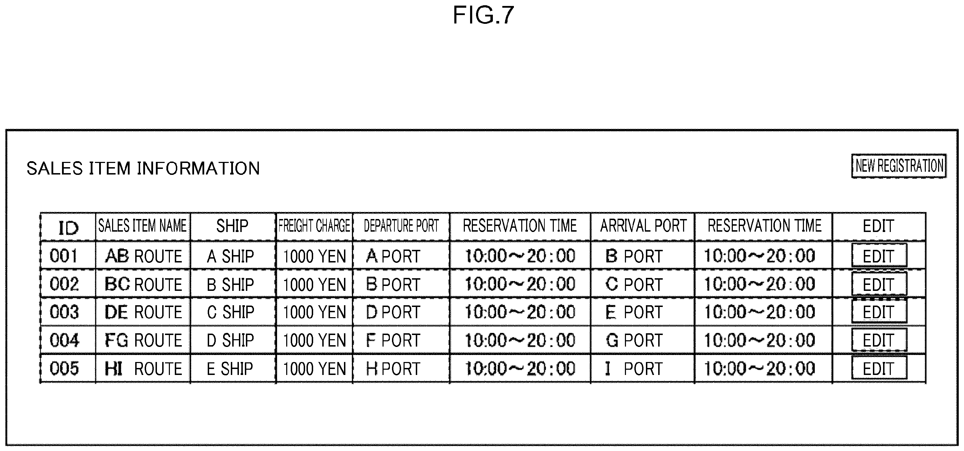

Fig. 7 is a diagram illustrating an example of the sales item information list screen. The sales item information list screen is a screen for displaying a list of registered sales items and is displayed on the display module 327 when the business operator who provides the port use platform performs a predetermined operation on the reservation management server 3. The stock of the sales items can be grasped by the screen.

The sales item information list screen includes IDs identifying each sales item, sales item names, ships to be used, freight charges, departure ports, reservable time zones of the departure ports, arrival ports, and reservable time zones of the arrival ports. When a new registration button is provided on the sales item information list screen and the new registration button is selected by the business operator, a screen for generating new sales item information may be displayed on the display module 327. On the sales item information list screen, edit buttons associated with each sales item are provided. When the edit button is selected, the sales item information edit screen is displayed on the display module 327.

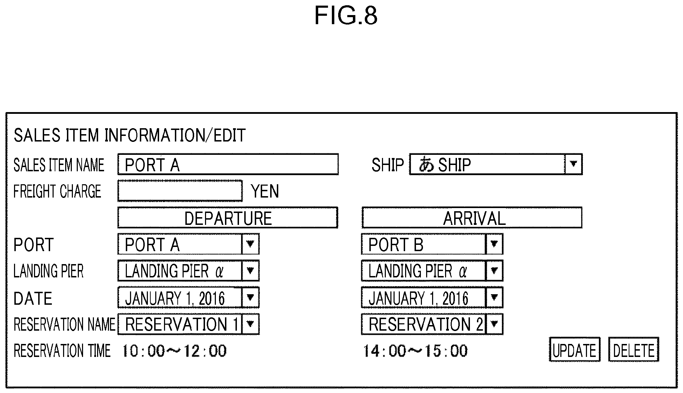

Fig. 8 is a diagram illustrating an example of the sales item information edit screen. The sales item information edit screen is a screen for updating and deleting registered sales item information. On the sales item information edit screen, it is possible to update the sales item name, the ship to be used, the freight charge, the departure port, the reservable time zone of the departure port, the arrival port, and the reservable time zone of the arrival port. After necessary sales item information is set, when an update button is selected, updated sales item information is stored in the storage module 328. When a delete button is selected, the sales item information is deleted.

Let us return to Fig. 1B. The settlement module 325 performs settlement when selling a sales item by using a system of a settlement business agent company as needed. The form output module 326 outputs a form required when selling a sales item to the user terminal 4. A mode of the output is not limited. For example, the form is outputted to the ship manager terminal 1 through email or facsimile. The storage module 328 stores the notice, the event information, the user master information, the sales item information, and the like described above.

The user terminal 4 is used by a normal user or a user of a travel agency or the like. The user terminal 4 has a communication module 41, a sales item reservation application module 42, a display controller 43, a display module 44, and the like. The communication module 41 communicates with the port reservation module 31. The sales item reservation application module 42 performs reservation of a sales item according to an operation from a user. The display controller 43 causes the display module 44 to display a screen showing the sales item information and the like. For example, when a user performs reservation of a sales item by using the sales item reservation application module 42, the display controller 43 displays a screen showing the sales item information, so that the user can perform application of sales item reservation while confirming stock.

In this way, the present embodiment provides a convenient port use platform that can efficiently make a reservation of a port by receiving registrations of a plurality of ships and ports from each ship manager and each port manager, respectively, and integrally managing the ships and the ports by using the reservation management server 3. Further, a single system manages a plurality of ports, so that it is possible to grasp congestion situations of ports at a glance. Therefore, it becomes easy to supply a ship transportation service.

In addition, when ships are used and one port has a plurality of landing piers, the port manager can utilize the present invention when leasing a temporarily unoccupied landing pier by the hour by considering reservation and use situations of each landing pier. Further, the ship manager can lease ships of the present invention, which are not operated by the ship manager, to a third party. In this case, the ship manager discloses a list of ships, which are managed by the ship manager and are not operated, to the third party from a ship information list of the present invention, and the third party searches for and selects a desired ship and performs an operation where the ship leaves from a predetermined port and returns to a predetermined port. Therefore, it is possible to make a reservation where a ship moves between arbitrary ports by utilizing the present invention.

The ship manager can easily register, refer to, update, and delete information of a ship managed by the ship manager himself or herself. In addition, the ship manager can make a port use reservation while viewing a ship schedule screen. In this way, the ship manager can integrally perform ship information management and port use reservation. In particular, it is a great advantage for the manager to be able to process a reservation operation of a movement between different ports on the same platform.

Further, when expanding functions of the system, it is additionally possible to pay a port usage fee by settlement on the Internet. Thereby, ports can be more easily used in a series of flows from the reservation to the settlement.

The port manager can register, refer to, update, and delete information of the ports managed by the port manager himself or herself and can efficiently manage the ports. Further, cooperation with ports managed by another manager is possible, so that it is possible to improve utilization rate of the ports managed by the port manager himself or herself. Further, a ship management operator can register stock management information related to sales of seats in a ship interlocked with a ship operation from a port to another port by only performing port reservation.

By adding a settlement control function interlocked with the present system, it is possible to collect a port usage fee of a period of time, a form, and an amount specified by the port manager more easily and reliably than a method such as a current bank transfer and cache reception. Therefore, it is possible to reduce management cost related to fee collection. Further, it is possible to easily grasp how much and at which timing the port managed by the port manager himself or herself is utilized, and it is possible to perform marketing activity to promote use of the port easier than before through comparison with other ports and the like.

Further, when assuming movements between a plurality of ports whose management main bodies are different as described above, not only a user of the ports can efficiently apply for use of each port, but also the user of the ports can efficiently perform stock management for boarding reservation sales between the ports to and from which a ship moves because information of the ship moving between the ports is generated at the same time as the use of the ports is applied.

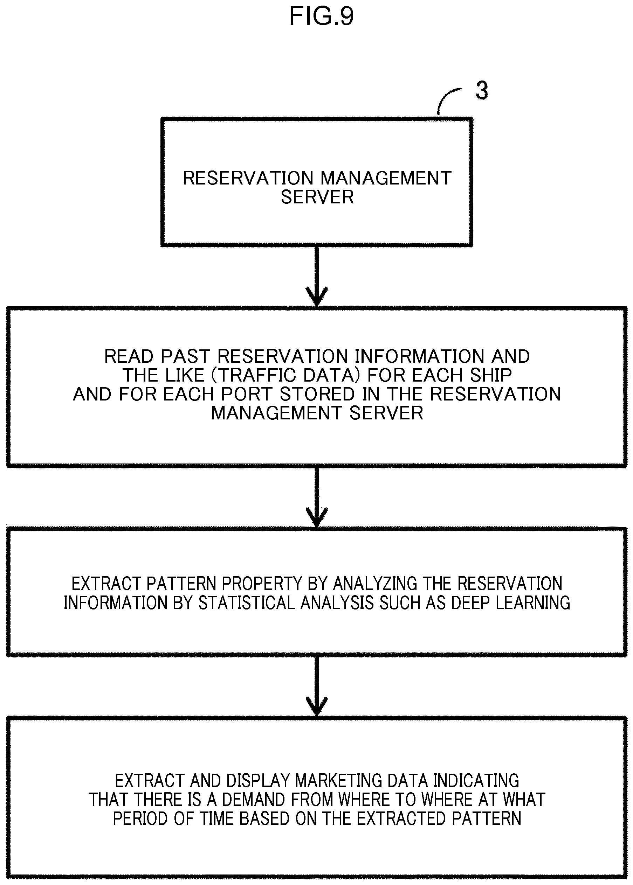

Further, as illustrated in Fig. 9, by reading past reservation information and the like (traffic data) for each ship and for each port stored in the reservation management server 3 and extracting pattern property by analyzing the reservation information by statistical analysis such as deep learning, it is possible to extract and display marketing data indicating that there is a demand from where to where at what period of time based on the extracted pattern.

The configuration of the port management system illustrated in Fig. 1B is only an illustrative example, and it is needless to say that various additions, deletions, and modifications can be made to the configuration, such as the same port reservation application module 13 as that of the port manager terminal 2 is provided to the user terminal 4 or the ship manager terminal 1 and the port manager terminal 2 are integrated. Part or all of each module of the port management system may be realized by causing a processor to execute a predetermined program.

### (Second Embodiment)

The second embodiment described below provides a parking lot management system, a reservation management server, a vehicle manager terminal, and a parking lot manager terminal for realizing efficient parking lot management by applying an idea of the first embodiment described above.

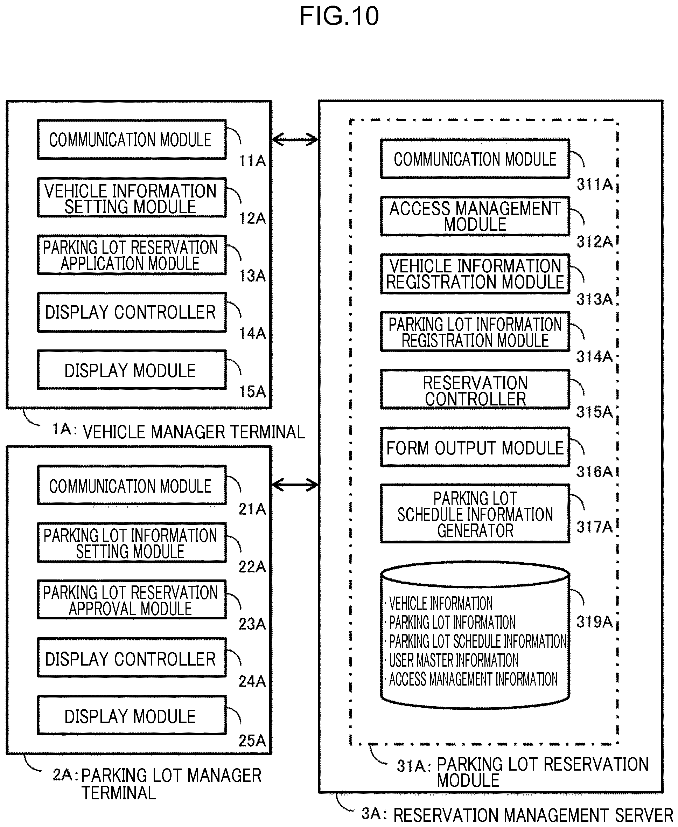

Fig. 10 is a block diagram illustrating an outline configuration of a parking lot management system according to an embodiment. The parking lot management system includes a vehicle manager terminal 1A, a parking lot manager terminal 2A, a reservation management server 3A. Although Fig. 10 illustrates one vehicle manager terminal 1A and one parking lot manager terminal 2A, normally there are a plurality of vehicle manager terminals 1A and a plurality of parking lot manager terminals 2A. By registering vehicle information and applying for a use application of a parking lot by reading the registered vehicle information through operation of the parking lot management system, it is possible to grasp when a vehicle moves from which parking lot to which parking lot.

First, the vehicle manager terminal 1A will be described. The vehicle manager terminal 1A is used by a vehicle manager (for example, a normal user) who manages an individual vehicle. The vehicle manager terminal 1A has a communication module 11A, a vehicle information setting module 12A, a parking lot reservation application module 13A, a display controller 14A, a display module 15A, and the like.

The communication module 11A communicates with the reservation management server 3A and the like.

The vehicle information setting module 12A receives setting of information (hereinafter referred to as vehicle information) related to a vehicle managed by the vehicle manager himself or herself from the vehicle manager and transmits the vehicle information to the reservation management server 3A through the communication module 11A.

The parking lot reservation application module 13A receives setting of information for applying for a use reservation of a parking lot, more specifically, information including a parking lot desired to be used and use start date and time and use end date and time of the parking lot (hereinafter referred to as parking lot reservation application information) from the vehicle manager. Then, the parking lot reservation application module 13A transmits the parking lot reservation application information to the reservation management server 3A through the communication module 11A.

The display controller 14A causes the display module 15A to display a vehicle information setting screen, a vehicle information list screen, a vehicle information edit screen, a parking lot schedule screen, a parking lot reservation screen, and the like.

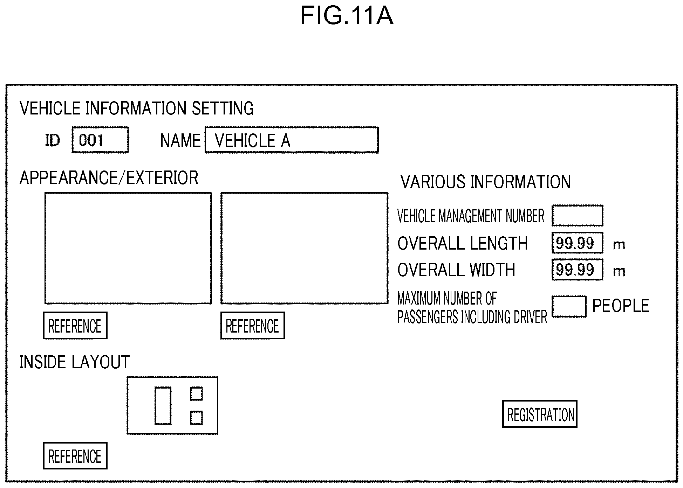

Fig. 11A is a diagram illustrating an example of the vehicle information setting screen. The vehicle information setting screen is a screen for newly registering a vehicle and is displayed on the display module 15A when the vehicle manager performs a predetermined operation on the vehicle manager terminal 1A.

The vehicle information setting screen includes in advance a unique vehicle ID attached to each vehicle or an ID for obtaining an optimal vehicle group from, for example, a car share/ride share business operator or a car rental business operator in cooperation with user information. On the vehicle information setting screen, it is possible to set vehicle information such as a name, an appearance/exterior, an inside layout, and the like of the vehicle (in the case of a shop specific vehicle, content of mounted sales items) according to an operation of the vehicle manager. Further, on the vehicle information setting screen, it is also possible to set more detailed vehicle information such as a vehicle management number, overall length, overall width, the maximum number of passengers including a driver, and the like. After required vehicle information is set, when a registration button is selected by the vehicle manager, the set vehicle information is stored in a storage module (not illustrated in the drawings) in the vehicle manager terminal 1A and/or transmitted to the reservation management server 3A.

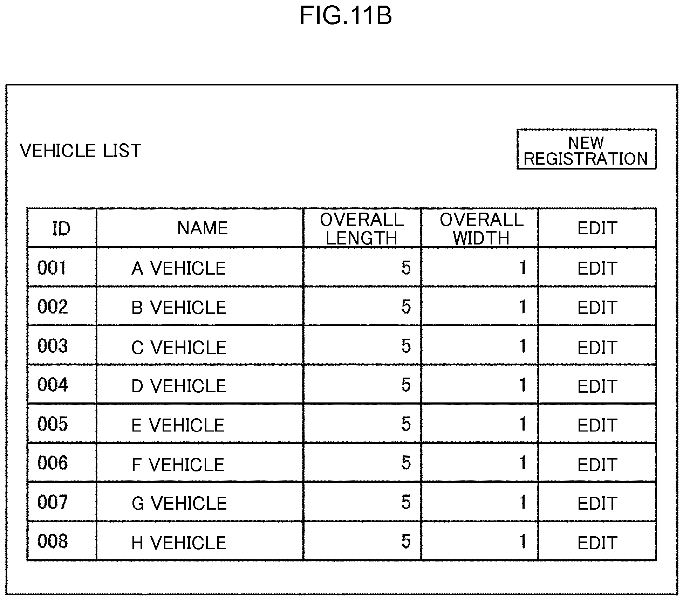

Fig. 11B is a diagram illustrating an example of the vehicle information list screen. The vehicle information list screen is a screen for displaying and confirming a list of registered vehicles. When the vehicle manager performs a predetermined operation on the vehicle manager terminal 1A, the vehicle information is acquired from the storage module in the vehicle manager terminal 1A or the reservation management server 3A and the vehicle information list screen is displayed on the display module 15A.

The vehicle information list screen includes at least part of each piece of vehicle information, for example, the vehicle ID, the name of the vehicle, the overall length, and the overall width. The vehicle information setting screen illustrated in Fig. 11A may be displayed on the display module 15A when a new registration button is provided on the vehicle information list screen and the new registration button is selected by the vehicle manager. An edit button associated with each vehicle is provided on the vehicle information list screen. When the edit button is selected, the vehicle information edit screen is displayed on the display module 15A. In addition to items illustrated in Fig. 11B, other various items may be able to be registered.

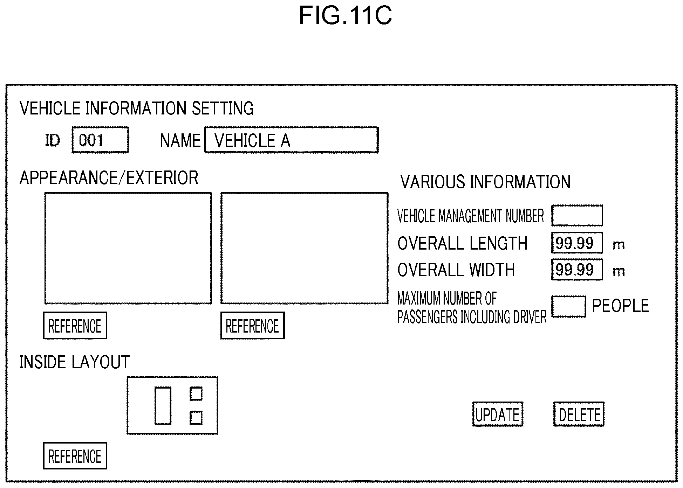

Fig. 11C is a diagram illustrating an example of the vehicle information edit screen. The vehicle information edit screen is a screen for confirming, updating, and deleting registered vehicle information.

The vehicle information edit screen is similar to the vehicle information setting screen illustrated in Fig. 11A, and set vehicle information can be updated on the vehicle information edit screen. The vehicle information edit screen is provided with an update button and a delete button. After required vehicle information is updated, when the update button is selected by the vehicle manager, the updated vehicle information is stored in the storage module in the vehicle manager terminal 1A and/or transmitted to the reservation management server 3A. When the delete button is selected by the vehicle manager, the vehicle information is deleted.

The parking lot schedule screen and the parking lot reservation screen displayed on the display module 15A will be described later.

Let us return to Fig. 10. The parking lot manager terminal 2A will be described. The parking lot manager terminal 2A is used by a parking lot manager who manages an individual parking lot. The parking lot manager terminal 2A has a communication module 21A, a parking lot information setting module 22A, a parking lot reservation approval module 23A, a display controller 24A, a display module 25A, and the like.

The communication module 21A communicates with the reservation management server 3A and the like.

The parking lot information setting module 22A receives setting of information (hereinafter referred to as parking lot information) related to one parking lot or a plurality of parking lots managed by the parking lot manager himself or herself from the parking lot manager and transmits the parking lot information to the reservation management server 3A through the communication module 21A.

The parking lot reservation approval module 23A receives the parking lot reservation application information set by the vehicle manager terminal 1A from the reservation management server 3A. Then, the parking lot reservation approval module 23A sets an answer of whether or not to approve a parking lot use reservation application of the received parking lot reservation application information according to an operation from the parking lot manager and transmits the answer to the reservation management server 3A.

The display controller 24A causes the display module 25A to display a parking lot information setting screen, a parking lot information list screen, a parking lot information edit screen, a parking lot schedule screen, and the like.

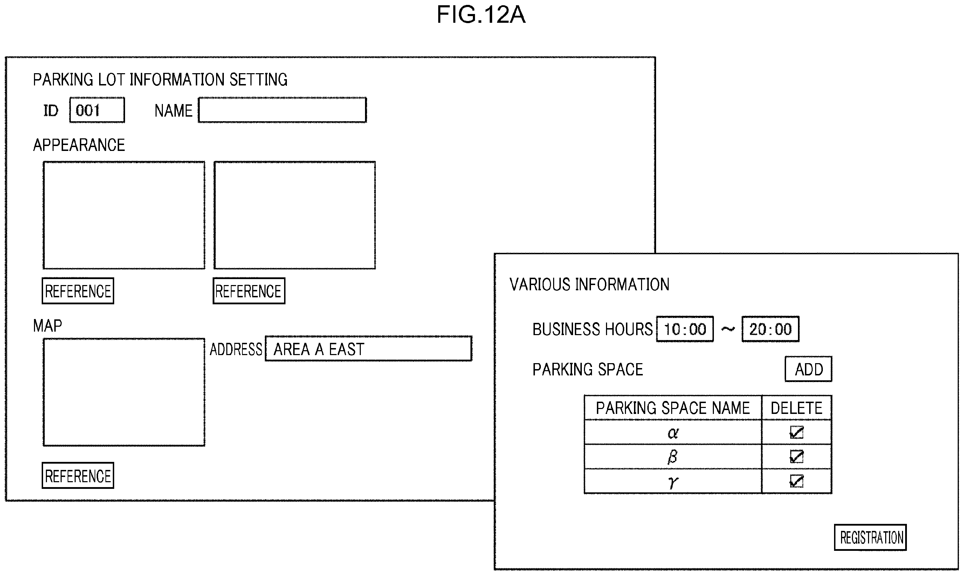

Fig. 12A is a diagram illustrating an example of the parking lot information setting screen. The parking lot information setting screen is a screen for newly registering a parking lot and is displayed on the display module 25A when the parking lot manager performs a predetermined operation on the parking lot manager terminal 2A.

The parking lot information setting screen includes in advance a unique parking lot ID attached to each parking lot. On the parking lot information setting screen, it is possible to set parking lot information such as a name, an appearance, an address, a map, and the like of the parking lot according to an operation of the parking lot manager. Further, on the parking lot information setting screen, it is also possible to set more detailed parking lot information such as business hours, a parking space, and the like. After required parking lot information is set, when a registration button is selected by the parking lot manager, the set parking lot information is stored in a storage module (not illustrated in the drawings) in the parking lot manager terminal 2A and/or transmitted to the reservation management server 3A.

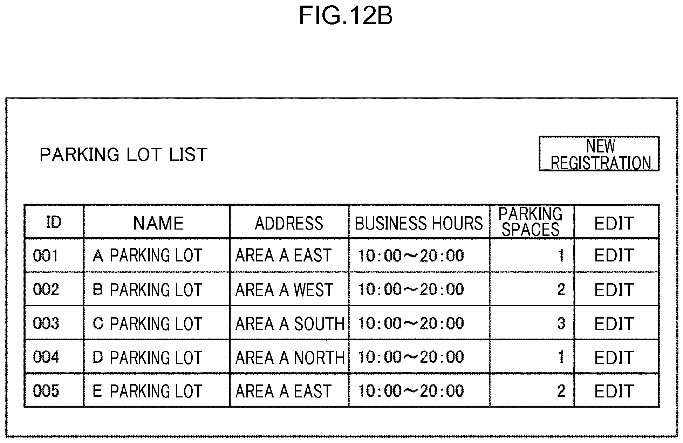

Fig. 12B is a diagram illustrating an example of the parking lot information list screen. The parking lot information list screen is a screen for displaying a list of registered parking lots. When the parking lot manager performs a predetermined operation on the parking lot manager terminal 2A, the parking lot information is acquired from the storage module in the parking lot manager terminal 2A or the reservation management server 3A and the parking lot information list screen is displayed on the display module 25A.

The parking lot information list screen includes at least part of each piece of parking lot information, for example, the parking lot ID, and the name, the address, the business hours, and the number of parking spaces of the parking lot. The parking lot information setting screen illustrated in Fig. 12A may be displayed on the display module 25A when a new registration button is provided on the parking lot information list screen and the new registration button is selected by the parking lot manager. An edit button associated with each parking lot is provided on the parking lot information list screen. When the edit button is selected, the parking lot information edit screen is displayed on the display module 25A.

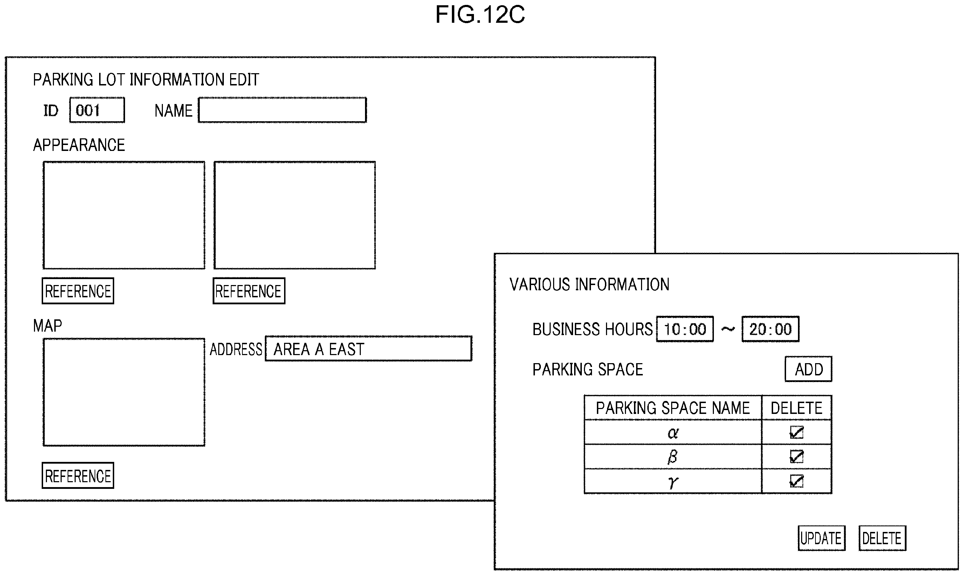

Fig. 12C is a diagram illustrating an example of the parking lot information edit screen. The parking lot information edit screen is a screen for confirming, updating, and deleting registered parking lot information.

The parking lot information edit screen is similar to the parking lot information setting screen illustrated in Fig. 12A, and set parking lot information can be updated on the parking lot information edit screen. The parking lot information edit screen is provided with an update button and a delete button. After required parking lot information is updated, when the update button is selected by the parking lot manager, the updated parking lot information is stored in the storage module in the parking lot manager terminal 2A and/or transmitted to the reservation management server 3A. When the delete button is selected by the parking lot manager, the parking lot information is deleted.

The parking lot schedule screen displayed on the display module 25A will be described later.

Subsequently, the reservation management server 3A in Fig. 10 will be described. The reservation management server 3A is mainly used by a business operator who provides a parking lot use platform and performs management (in particular, reservation management) of all parking lots. Vehicles and parking lots can be integrally managed by the reservation management server 3A. The reservation management server 3A is composed mainly of a parking lot reservation module 31.

The parking lot reservation module 31 is mainly accessed from the vehicle manager terminal 1A and the parking lot manager terminal 2A and includes a communication module 311A, an access management module 312A, a vehicle information registration module 313A, a parking lot information registration module 314A, a reservation controller 315A, a form output module 316A, a parking lot schedule information generator 317A, a storage module 319A, and the like.

The communication module 311A communicates with the vehicle manager terminal 1A, the parking lot manager terminal 2A, and the like.

The access management module 312A manages an ID and a password of each user based on user master information stored in the storage module 319A and stores access management information indicating which user accessed what information in the storage module 319A.

The vehicle information registration module 313A acquires vehicle information from the vehicle manager terminal 1A through the communication module 311A and registers the vehicle information in the storage module 319A. The vehicle of the vehicle information registered here is a vehicle to be managed in the parking lot management system.

The parking lot information registration module 314A acquires parking lot information from the parking lot manager terminal 2A through the communication module 311A and registers the parking lot information in the storage module 319A. The vehicle of the parking lot information registered here is a parking lot to be managed in the parking lot management system.

The reservation controller 315A receives parking lot reservation application information from the parking lot reservation application module 13A in the vehicle manager terminal 1A. Then, the reservation controller 315A transmits the parking lot reservation application information to a parking lot manager terminal 2A of a parking lot manager who manages a parking lot to which a use reservation is applied in the parking lot reservation application information. Further, the reservation controller 315A receives an answer to the use reservation application from the parking lot reservation approval module 23A in the parking lot manager terminal 2A.

The reservation controller 315A controls use reservation of each parking lot based on the parking lot reservation application information and an answer to the parking lot reservation application information. In other words, the reservation controller 315A grasps date and time where the use reservation of each parking lot is set. When the parking lot information includes information of parking spaces included in each parking lot, the reservation controller 315A may control the use reservation for each parking space.

When a use reservation application from the vehicle manager terminal 1A is approved, the form output module 316A outputs a form indicating the approval to the vehicle manager terminal 1A. A mode of the output is not limited. For example, the form is outputted to the vehicle manager terminal 1A through email or facsimile.

The parking lot schedule information generator 317A generates parking lot schedule information indicating reserved dates and times by considering a use reservation state of each parking lot. When the parking lot use reservation application is approved, the parking lot schedule information generator 317A updates the parking lot schedule information. The parking lot schedule information generator 317A stores the parking lot schedule information in the storage module 319A and, if necessary, transmits the parking lot schedule information to the vehicle manager terminal 1A and the parking lot manager terminal 2A.

The storage module 319A stores the vehicle information, the parking lot information, the parking lot schedule information, the user master information, the access management information, and the like.

As described above, the parking lot schedule information is transmitted to the vehicle manager terminal 1A and the parking lot manager terminal 2A, and the parking lot schedule screen including the parking lot schedule information is displayed on the display modules 15A and 25, respectively, by the display controllers 14A and 24 of the vehicle manager terminal 1A and the parking lot manager terminal 2A.

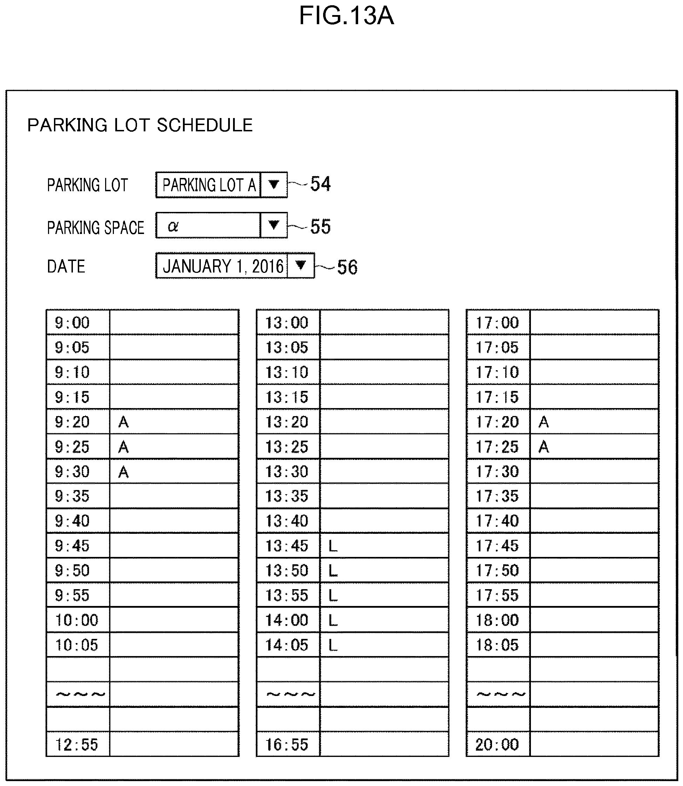

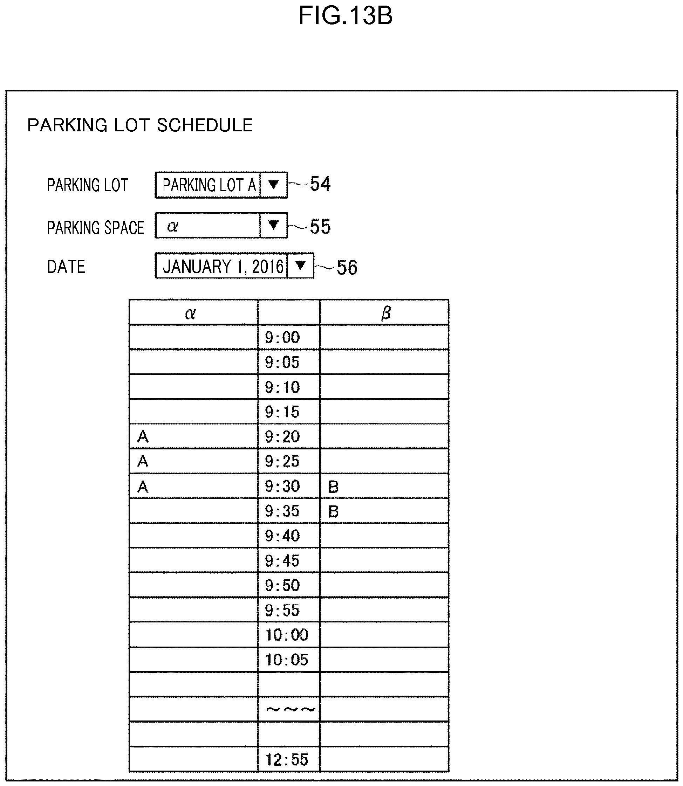

Fig. 13A and Fig. 13B are diagrams illustrating an example of the parking lot schedule screen. When the vehicle manager (or the parking lot manager) performs a predetermined operation on the vehicle manager terminal 1A (or the parking lot manager terminal 2A), the parking lot schedule information is acquired from the reservation management server 3A and the parking lot schedule screen is displayed on the display module 15A (or the display module 25A).

The parking lot schedule screen includes information indicating which vehicle manager (or which vehicle) performs use reservation in each period of time as the parking lot schedule information. It is known that there is no use reservation in a period of time where there is no vehicle manager name. The parking lot schedule screen also includes a parking lot setting means 54, a parking space setting means 55, and a date setting means 56. As these setting means, means by which setting can be easily performed, such as pull-down type means, are desirable. When a parking lot is selected by the parking lot setting means 54, a parking space included in the parking lot can be selected by the parking space setting means 55. The parking lot schedule information of the selected parking lot, parking space, and date is displayed.

Fig. 13A is an illustrative example of a schedule screen of a parking lot having one parking space. Fig.13B is an illustrative example of a schedule screen of a parking lot having a plurality of parking spaces (parking spaces α and β in Fig. 13B), and schedule information of the parking spaces is displayed on one screen.

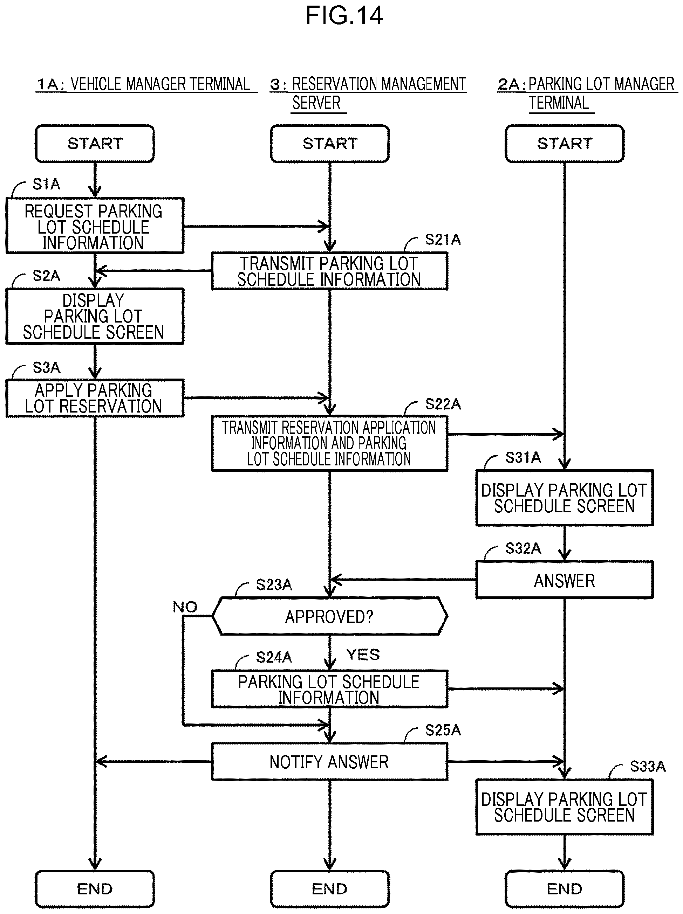

Fig. 14 is a sequence diagram for explaining a parking lot reservation. The vehicle information and the parking lot information are registered in advance by the vehicle information registration module 313A and the parking lot information registration module 314A, respectively, and the parking lot schedule information is generated by the parking lot schedule information generator 317A.

First, the vehicle manager performs an operation for a parking lot use reservation application on the vehicle manager terminal 1A. In response to this, the parking lot reservation application module 13A in the vehicle manager terminal 1A requests the reservation management server 3A to transmit the parking lot schedule information (step S1A).

When the reservation controller 315A of the reservation management server 3A receives a request of the parking lot schedule information, the reservation controller 315A transmits the parking lot schedule information to a transmission source of the request (step S21A).

When the display controller 14A of the vehicle manager terminal 1A receives the parking lot schedule information, the display controller 14A causes the display module 15A to display the parking lot reservation screen including the parking lot schedule information (step S2A).

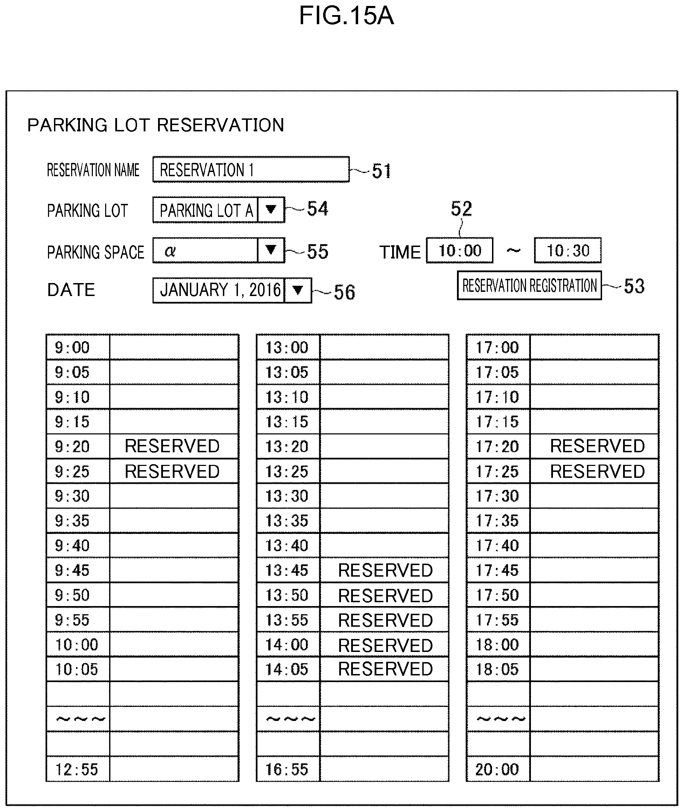

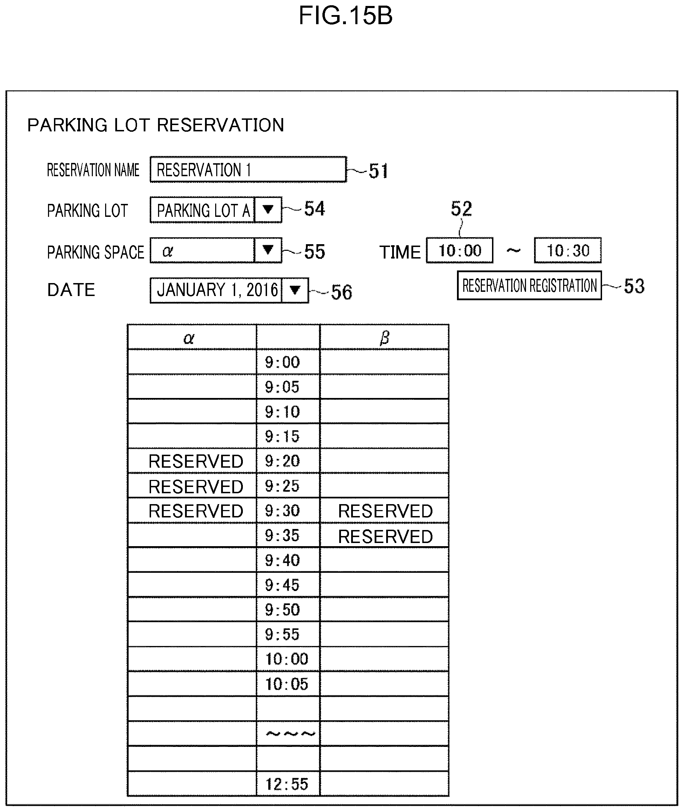

Fig. 15A and Fig. 15B are diagrams illustrating an example of the parking lot reservation screen. The parking lot reservation screen is similar to the parking lot schedule screen in Fig. 13 and further includes a reservation name setting means 51, a reservation time setting means 52, and a reservation registration means 53. The reservation name setting means 51 sets a reservation name when the vehicle manager inputs an arbitrary reservation name. In response to an operation of the vehicle manager, a parking lot, a parking space, date, and times (use start times and use end times), where a use reservation is applied, are set by the parking lot setting means 54, the parking space setting means 55, the date setting means 56, and the reservation time setting means 52. These are set as the parking lot reservation application information. It is desirable that a date and time that has been reserved cannot be selected.

Fig. 15A is an illustrative example of a schedule screen of a parking lot having one parking space. Fig. 15B is an illustrative example of a schedule screen of a parking lot having a landing pier of parking spaces (parking spaces α and β in Fig. 15B), and the parking spaces can be reserved from one screen.

Further, when the vehicle manager selects the reservation registration means 53, the parking lot reservation application module 13A transmits the set parking lot reservation application information to the reservation management server 3A (step S3A in Fig. 14).

In this way, when setting the parking lot reservation application information, the display controller 14A causes the display module 15A to display a screen including the parking lot schedule information. Therefore, the vehicle manager can easily visually grasp a use reservation state of the parking lot and can easily make a use reservation application of free date and time.

When the reservation controller 315A of the reservation management server 3A receives the parking lot reservation application information, the reservation controller 315A transmits the parking lot reservation application information and the parking lot schedule information to the parking lot manager terminal 2A of the parking lot manager to whom the use reservation is applied (step S22A).

When the display controller 24A of the parking lot manager terminal 2A receives the parking lot reservation application information and the parking lot schedule information, the display controller 24A causes the display module 25A to display the parking lot schedule screen including the parking lot schedule information and content of the use reservation application (step S31A). Then, in response to an operation of the parking lot manager, the parking lot reservation approval module 23A sets an answer of whether or not to approve the use reservation application and transmits the answer to the vehicle manager terminal 1A of a transmission source of the parking lot reservation application information (step S32A).

In this way, when setting an answer of whether or not to approve the use reservation application, the display controller 24A causes the display module 25A to display the screen including the parking lot schedule information. Therefore, the parking lot manager can easily visually grasp the use reservation state of the parking lot and can easily determine whether or not to approve the use reservation application.

The reservation controller 315A of the reservation management server 3A receives the answer from the parking lot manager terminal 2A. When the answer is an answer indicating that the use reservation application is approved (YES of step S23A), the parking lot schedule information generator 317A updates the parking lot schedule information (step S24A). Then, the reservation controller 315A transmits information indicating that the use reservation is approved to the vehicle manager terminal 1A that has transmitted the parking lot reservation application information (step S25A). At this time, the form output module 316A outputs a necessary form to the vehicle manager terminal 1A.

When the answer is an answer indicating that the use reservation application is not approved (NO of step S23A), the reservation controller 315A transmits information indicating that the use reservation is not approved to the vehicle manager terminal 1A that has transmitted the parking lot reservation application information (step S25A).

In this way, the parking lot use reservation is completed. It is desirable that a fact that the answer has been notified to the vehicle manager terminal 1A and the updated parking lot schedule information can be referred to from the parking lot manager terminal 2A (step S33A).

As described above, the parking lot management system includes the vehicle manager terminal 1A, the parking lot manager terminal 2A, and the parking lot reservation module 31 of the reservation management server 3A. Thereby, the vehicle manager can easily perform operations from confirmation of the parking lot schedule information to application of the use reservation on the vehicle manager terminal 1A. Further, the parking lot manager can easily confirm the parking lot schedule information and make an answer to the application of the use reservation on the parking lot manager terminal 2A, and a result of the answer is reflected on the parking lot schedule information.

In this way, the present embodiment provides a convenient parking lot use platform that can efficiently make a reservation of a parking lot by receiving registrations of a plurality of vehicles and parking lots from each vehicle manager and each parking lot manager, respectively (however, in the present embodiment, the registration of vehicles may be omitted), and integrally managing the vehicles and the parking lots by using the reservation management server 3A. Further, a single system manages a plurality of parking lots, so that it is possible to grasp congestion situations of parking lots at a glance.

The vehicle manager can easily register, refer to, update, and delete information of a vehicle managed by the vehicle manager himself or herself. In addition, the vehicle manager can make a parking lot use reservation while viewing a vehicle schedule screen. In this way, the vehicle manager can integrally perform vehicle information management and parking lot use reservation. In particular, it is a great advantage for the manager to be able to process a reservation operation of a movement between different parking lots on the same platform.

Further, when expanding functions of the system, it is additionally possible to pay a parking lot usage fee by settlement on the Internet. Thereby, parking lots can be more easily used in a series of flows from the reservation to the settlement.

The parking lot manager can register, refer to, update, and delete information of the parking lots managed by the parking lot manager himself or herself and can efficiently manage the parking lots. Further, cooperation with parking lots managed by another manager is possible, so that it is possible to improve utilization rate of the parking lots managed by the parking lot manager himself or herself.

By adding a settlement control function interlocked with the present system, it is possible to collect a parking lot usage fee of a period of time, a form, and an amount specified by the parking lot manager more easily and reliably than a method such as a current bank transfer and cache reception. Therefore, it is possible to reduce management cost related to fee collection. Further, it is possible to easily grasp how much and at which timing the parking lot managed by the parking lot manager himself or herself is utilized, and it is possible to perform marketing activity to promote use of the parking lot easier than before through comparison with other parking lots and the like.

Further, when assuming movements between a plurality of parking lots whose management main bodies are different as described above, not only a user of the parking lots can efficiently apply for use of each parking lot, but also, for the user of the parking lots, information of the vehicle moving between the parking lots is generated at the same time as the use of the parking lots is applied.

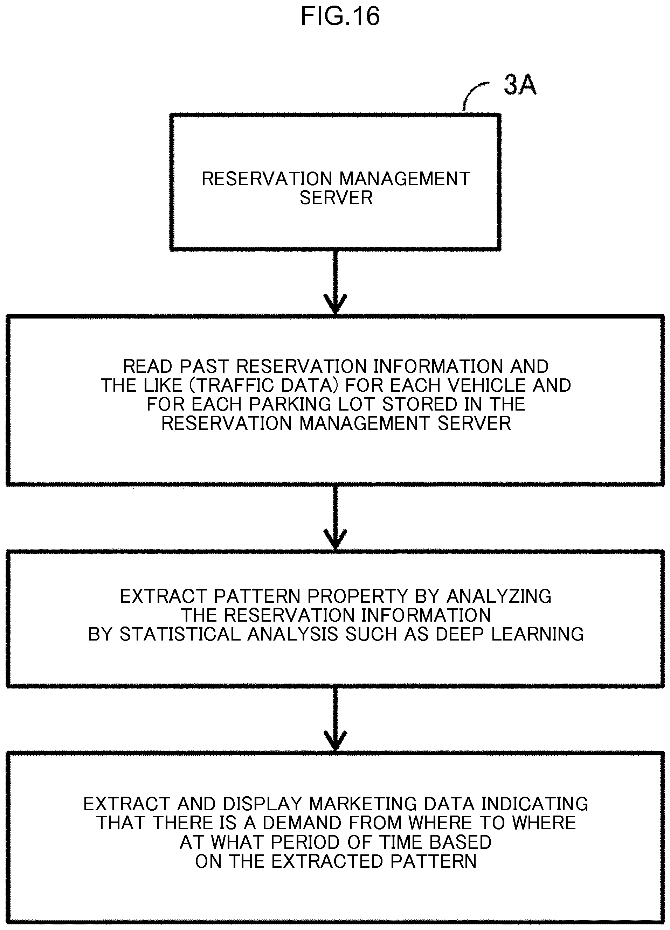

Further, as illustrated in Fig. 16, by reading past reservation information and the like (traffic data) for each vehicle and for each parking lot stored in the reservation management server 3A and extracting pattern property by analyzing the reservation information by statistical analysis such as deep learning, it is possible to extract and display marketing data indicating that there is a demand from where to where at what period of time based on the extracted pattern.

The configuration of the parking lot management system illustrated in Fig. 10 is only an illustrative example, and it is needless to say that various additions, deletions, and modifications can be made to the configuration, such as the vehicle manager terminal 1A and the parking lot manager terminal 2A are integrated. Part or all of each module of the parking lot management system may be realized by causing a processor to execute a predetermined program.

According to the second embodiment, a parking lot management system, a reservation management server, a vehicle manager terminal, and a parking lot manager terminal described below are considered as an example.
[1] A parking lot management system including
   a vehicle manager terminal for a vehicle manager, and
   a parking lot manager terminal for a parking lot manager, in which
   the vehicle manager terminal has
      a parking lot reservation application module that sets parking lot reservation application information for applying parking lot use reservation, and
      a first display controller that causes a screen showing parking lot schedule information indicating reserved dates and times of each parking lot to be displayed when the parking lot reservation application information is set, and
   the parking lot manager terminal has
      a parking lot information setting module that sets parking lot information related to a parking lot,
      a parking lot reservation approval module that sets an answer of whether or not to approve the parking lot use reservation application of the parking lot reservation application information, and
      a second display controller that causes a screen showing the parking lot schedule information to be displayed when the answer is set.
[2] The parking lot management system according to [1] in which
   the parking lot information includes information of parking spaces included in each parking lot, and
   the parking lot schedule information generator generates the parking lot schedule information for each parking space of the parking lot.
[3] The parking lot management system according to [1] or [2] in which the screen showing the parking lot schedule information includes a parking lot setting means and a date setting means.
[4] A reservation management server including
   a parking lot information registration module that registers parking lot information related to a parking lot,
   a reservation controller that controls parking lot use reservation based on parking lot reservation application information for applying parking lot use reservation and an answer of whether or not to approve the parking lot use reservation application of the parking lot reservation application information, and
   a parking lot schedule information generator that generates parking lot schedule information indicating reserved dates and times of each parking lot by considering a use reservation state of each parking lot and transmits the parking lot schedule information to a transmission source of the parking lot reservation application information and the answer.
[5] A vehicle manager terminal including
   a parking lot reservation application module that sets parking lot reservation application information for applying parking lot use reservation, and
   a display controller that displays a screen showing parking lot schedule information indicating reserved dates and times of each parking lot, which is generated by considering the parking lot reservation application information and an answer of whether or not to approve the parking lot use reservation application of the parking lot reservation application information, when the parking lot reservation application information is set.
[6] A parking lot manager terminal including
   a parking lot information setting module that sets parking lot information related to a parking lot,
   a parking lot reservation approval module that sets an answer of whether or not to approve parking lot use reservation application, and
   a display controller that causes a screen showing parking lot schedule information indicating reserved dates and times of each parking lot, which is generated by considering the answer, to be displayed when the answer is set.
[7] A parking lot management system including
   a parking lot information registration module that registers parking lot information related to a parking lot,
   a parking lot reservation application module that sets parking lot reservation application information for applying parking lot use reservation,
   a parking lot reservation approval module that sets an answer of whether or not to approve the parking lot use reservation application of the parking lot reservation application information,
   a reservation controller that controls the parking lot use reservation based on the parking lot reservation application information and the answer,
   a parking lot schedule information generator that generates parking lot schedule information by considering a use reservation state of each parking lot, and
   a display controller that causes a screen showing the parking lot schedule information to be displayed.

The above embodiments are described so that a person with an ordinary skill in the technical field to which the invention pertains can implement the invention. Various modified examples of the above embodiments can be naturally made by those skilled in the art, and the technical idea of the invention can be applied to other embodiments. Therefore, the invention is not limited to the described embodiments and should encompass the widest range in accordance with the technical ideas defined by the claims. Further, the invention can be applied not only to ships and vehicles, but also to arbitrary conveyances.

### Reference Signs List

- 1, 1A: vehicle manager terminal
- 11, 11A: communication module
- 12, 12A: vehicle information setting module
- 13, 13A: port reservation application module
- 14, 14A: display controller
- 15, 15A: display module
- 2, 2A: port manager terminal
- 21, 21A: communication module
- 22, 22A: port information setting module
- 23, 23A: port reservation approval module
- 24, 24A: display controller
- 25, 25A: display module
- 3, 3A: reservation management server
- 31, 31A: port reservation module
- 311, 311A: communication module
- 312, 312A: access management module
- 313, 313A: vehicle information registration module
- 314, 314A: port information registration module
- 315, 315A: reservation controller
- 316, 316A: form output module
- 317, 317A: port schedule information generator
- 318: ship operation information generator
- 319, 319A: storage module
- 32: sales item reservation module
- 321: communication module
- 322: access management module
- 323: sales item information controller
- 324: display controller
- 325: settlement module
- 326: form output module
- 327: display module
- 328: storage module
- 4: user terminal
- 41: communication module
- 42: sales item reservation application module
- 43: display controller
- 44: display module
- 51: reservation name setting means
- 52: reservation time setting means
- 53: reservation registration means
- 54: port setting means
- 55: landing pier setting means
- 56: date setting means

## Claims

1. A port management system comprising:
a vehicle manager terminal for a vehicle manager;
a port manager terminal for a port manager; and
a reservation management server, wherein
the vehicle manager terminal comprises:
a vehicle information setting module that sets vehicle information related to a vehicle;
a port reservation application module that sets port reservation application information for applying port use reservation; and
a first display controller that displays a screen showing port schedule information indicating reserved dates and times of each port when the port reservation application information is set,
the port manager terminal comprises:
a port information setting module that sets port information related to a port;
a port reservation approval module that sets an answer of whether or not to approve the port use reservation application of the port reservation application information; and
a second display controller that displays a screen showing the port schedule information when the answer is set, and
the reservation management server comprises:
a vehicle information registration module that registers the vehicle information;
a port information registration module that registers the port information;
a reservation controller that controls the port use reservation based on the port reservation application information and the answer; and
a port schedule information generator that generates the port schedule information by considering a use reservation state of each port and transmits the port schedule information to the vehicle manager terminal and the port manager terminal.

2. The port management system according to claim 1, wherein the reservation management server has a sales item information controller that generates sales item information including a vehicle to be used, a departure port, date and time of departure, an arrival port, and date and time of arrival based on the vehicle information, the port information, and the port schedule information.

3. The port management system according to claim 1 or 2, wherein
the port information includes information of landing piers included in each port, and
the port schedule information generator generates the port schedule information for each landing piers of the ports.

4. The port management system according to any one of claims 1 to 3, wherein the screen showing the port schedule information includes a port setting means and a date setting means.

5. A reservation management server comprising:
a port information registration module that registers port information related to a port;
a reservation controller that controls port use reservation based on port reservation application information for applying port use reservation and an answer of whether or not to approve the port use reservation application of the port reservation application information; and
a port schedule information generator that generates port schedule information indicating reserved dates and times of each port by considering a use reservation state of each port and transmits the port schedule information to a transmission source of the port reservation application information and the answer.

6. A vehicle manager terminal comprising:
a port reservation application module that sets port reservation application information for applying port use reservation; and
a display controller that displays a screen showing port schedule information indicating reserved dates and times of each port, which is generated by considering the port reservation application information and an answer of whether or not to approve the port use reservation application of the port reservation application information when the port reservation application information is set.

7. A port manager terminal comprising:
a port information setting module that sets port information related to a port;
a port reservation approval module that sets an answer of whether or not to approve a port use reservation application; and
a display controller that displays a screen showing port schedule information indicating reserved dates and times of each port, which is generated by considering the answer when the answer is set.

8. A port management system comprising:
a port information registration module that registers port information related to a port;
a port reservation application module that sets port reservation application information for applying port use reservation;
a port reservation approval module that sets an answer of whether or not to approve the port use reservation application of the port reservation application information;
a reservation controller that controls the port use reservation based on the port reservation application information and the answer;
a port schedule information generator that generates port schedule information by considering a use reservation state of each port; and
a display controller that causes a screen showing the port schedule information to be displayed.
